# EUROPEAN PATENT APPLICATION

(11) **EP 3 968 206 A1**
(43) Date of publication of application: **16.03.2022**
(21) Application number: 21164496.8
(22) Date of filing: 24.03.2021
(51) Int. Cl.: G06F 40/20, G06F 16/9535, G06F 16/9536

(54) **METHOD AND APPARATUS FOR DETERMINING RECOMMENDED EXPRESSIONS, DEVICE AND COMPUTER STORAGE MEDIUM**

(30) Priority: 10.09.2020 CN 202010949844
(71) Applicant: Beijing Baidu Netcom Science and Technology Co., Ltd., Beijing 100085 (CN)
(72) Inventor: XU, Shengtong, Beijing, Beijing 100085 (CN); YANG, Xiao, Beijing, Beijing 100085 (CN); HE, Yingding, Beijing, Beijing 100085 (CN); FAN, Miao, Beijing, Beijing 100085 (CN)
(74) Representative: dompatent von Kreisler Selting Werner - Partnerschaft von Patent- und Rechtsanwälten mbB

(57) **Abstract**

The present application discloses a method and apparatus for recommending expression to user, a device, a computer storage medium and a computer program product, which relates to the field of deep learning and big data technologies. An implementation includes: acquiring an input message; in response to the input message triggering expression recommendation, determining the occurrence probability of each candidate expression in the input message based on the expression triggering probability of a similar history message of the input message and the probability of each candidate expression input along with the similar history message; and determining an expression recommended to a user from the candidate expressions according to the occurrence probabilities. With the present application, the expression input efficiency of a user may be improved, and network traffic may be saved.

## Description

### Field of the Disclosure

The present application relates to the technical field of computer applications, and particularly to a method and apparatus for determining recommended expressions, a device, a computer storage medium and a computer program product under deep learning and big data technologies.

### Background of the Disclosure

In an instant messaging process, various expressions in an expression package become emotional expression ways used by people frequently. Emotions of a user may be precisely and efficiently expressed by inputting the expressions, and a chat atmosphere may be more relaxed and pleasanter. However, in the current expression input way, after clicking a designated component on instant messaging software, the user browses a large number of expression packages and selects the expression consistent with the emotion of the user therefrom to complete the input of the expression, which obviously wastes time and labor for the user, and also requires the large number of expression packages to be displayed to the user, thereby wasting network traffic.

### Summary of the Disclosure

In view of this, the present application provides a method and apparatus for determining recommended expressions, a device, a computer storage medium and a computer program product, so as to improve the expression input efficiency of a user and save network traffic.

In a first aspect, the present application provides a method for recommending expression to user, including:
acquiring a user input message;
in response to the input message triggering expression recommendation, determining the occurrence probability of each candidate expression in the input message based on the expression triggering probability of a similar history message of the input message and the probability of each candidate expression input along with the similar history message; and
determining an expressions recommended to a user from the candidate expressions according to the occurrence probabilities.

In a second aspect, the present application provides an apparatus for recommending expression to user, including:
a message acquiring module configured to acquire a user input message; and
an expression recommending module configured to, in response to the input message triggering expression recommendation, determine the occurrence probability of each candidate expression in the input message based on the expression triggering probability of a similar history message of the input message and the probability of each candidate expression input along with the similar history message, and determine an expression recommended to a user from the candidate expressions according to the occurrence probabilities.

In a third aspect, the present application provides an electronic device, including:
at least one processor; and
a memory connected with the at least one processor communicatively;
wherein the memory stores instructions executable by the at least one processor to enable the at least one processor to perform the above-mentioned method.

In a fourth aspect, the present application provides a non-transitory computer readable storage medium with computer instructions stored thereon, wherein the computer instructions are used for causing a computer to perform the above-mentioned method.

In a fifth aspect, the present application provides a computer program product, comprising instructions which, when the program is executed by a computer, cause the computer to perform the above-mentioned method.

According to the above technical solution of the present application, it is observed that the expression recommended to the user may be determined according to the carrying conditions of the expressions by the history message when the user inputs the message, and in this way, the user may conveniently, quickly and directly select input from the recommended expressions, thereby improving the expression input efficiency, and saving the network traffic.

Other effects of the above-mentioned alternatives will be described below in conjunction with embodiments.

### Brief Description of Drawings

The drawings are used for better understanding the present solution and do not constitute a limitation of the present application. In the drawings:
Fig. 1 shows an exemplary system architecture to which an embodiment of the present disclosure may be applied;
Fig. 2 is a flow chart of a main method according to an embodiment of the present application;
Figs. 3a and 3b are schematic diagrams in which an expression is input along with a history message according to an embodiment of the present application;
Figs. 4a and 4b are schematic diagrams of two recommended expressions according to an embodiment of the present application;
Fig. 5 is a flow chart of another method according to the embodiment of the present application;
Fig. 6 is a structural diagram of an apparatus according to an embodiment of the present application; and
Fig. 7 is a block diagram of an electronic device configured to implement the embodiment of the present application.

### Detailed Description of Preferred Embodiments

The following part will illustrate exemplary embodiments of the present application with reference to the drawings, including various details of the embodiments of the present application for a better understanding. The embodiments should be regarded only as exemplary ones. Therefore, those skilled in the art should appreciate that various changes or modifications can be made with respect to the embodiments described herein without departing from the scope and spirit of the present application. Similarly, for clarity and conciseness, the descriptions of the known functions and structures are omitted in the descriptions below.

Although there exist some expression recommending methods at present, in these methods, expressions are recommended only based on a keyword, for example, if a user inputs "happiness" in the process of inputting a certain message, a program may be triggered immediately to recommend expressions, such as "smile", "laugh", or the like, to the user. This method is relatively inflexible, the message input by the user may include the keyword "happiness", but the semantics of the complete message may not express a "happiness" emotion. For example, the message input by the user may be "for happiness, together go swimming", and the emotion of the user is not happiness, or even a depressed emotion, and therefore is required to be eased by swimming. Obviously, recommendation of the expressions, such as "laugh", or the like, to the user is inappropriate in such a case. In view of this, in the present application, the expressions are recommended at a message level instead of the keyword level, thereby more accurately surmising whether the user needs to input the expressions and the types of the expressions required to be input. Technical content according to the present application will be described below in detail in conjunction with an embodiment.

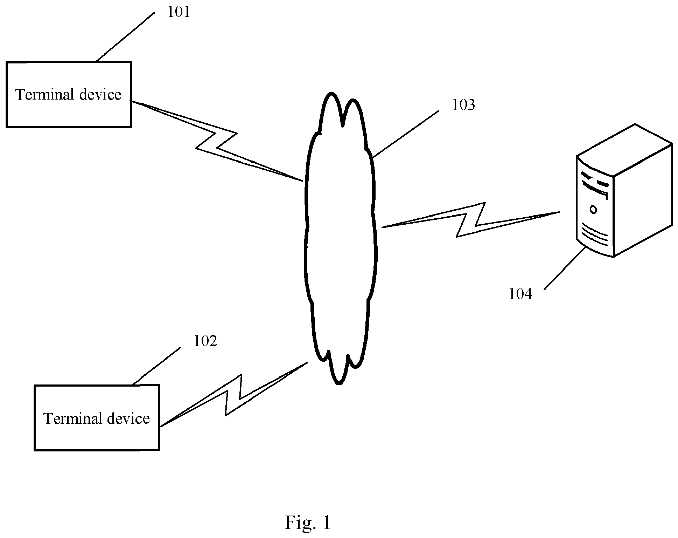

Fig. 1 shows an exemplary system architecture to which the embodiment of the present disclosure may be applied. As shown in Fig. 1, the system architecture may include terminal devices 101, 102, a network 103 and a server 104. The network 103 serves as a medium for providing communication links between the terminal devices 101, 102 and the server 104. The network 103 may include various connection types, such as wired and wireless communication links, or fiber-optic cables, or the like.

Users may use the terminal devices 101, 102 to interact with the server 104 through the network 103. Various applications, such as an instant messaging application, a voice interaction application, an input method application, a web browser application, a communication application, or the like, may be installed on the terminal devices 101, 102.

The terminal devices 101, 102 may be configured as various electronic devices capable of supporting an instant messaging function and an expression input function, including, but not limited to, a smart phone, a tablet, a personal computer (PC), a personal digital assistant (PDA), a notebook computer, a smart wearable device, a virtual reality device, an augmented reality device, a mixed reality device (i.e., a device which may support virtual reality and augmented reality), or the like. An apparatus according to the present disclosure may be provided and run in the above-mentioned server 104, or the terminal device 101 or 102 with high computing power. The apparatus may be implemented as a plurality of pieces of software or software modules (for example, for providing distributed service), or a single piece of software or software module, which is not limited specifically herein.

For example, the apparatus for recommending expressions is provided and run in the above-mentioned server 104, and the server 104 may acquire a message currently input by a user from the terminal device 101 in real time, and determine whether to recommend the expressions to the user and the expressions recommended to the user based on the current input message and a history message. If the expressions are determined to be recommended to the user, the recommended expressions may be sent to the terminal device 101 and displayed to the user by a screen of the terminal device 101. The user may select one of the recommended expressions to realize quick input of the expression.

The server 104 may be configured as a single server or a server group including a plurality of servers. It should be understood that the numbers of the terminal devices, the network, and the server in Fig. 1 are merely schematic. There may be any number of terminal devices, networks and servers as desired for an implementation.

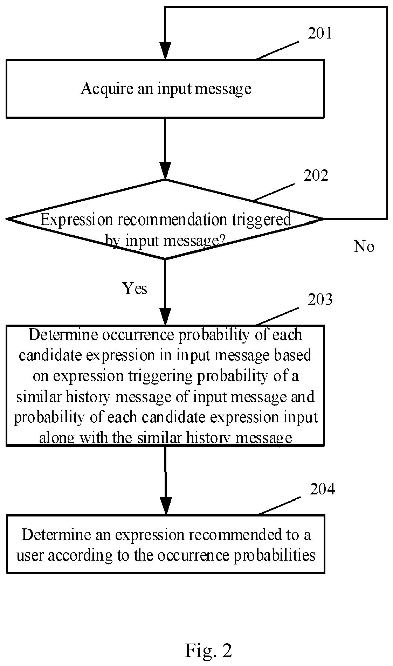

Fig. 2 is a flow chart of a main method according to the embodiment of the present application, and as shown in Fig. 2, the method may include the following steps:
201: Acquiring an input message.

In the present application, the input message may be a message input by the user in a message input component on an instant messaging client interface.

As a preferred implementation, in the present application, the flow of the method according to the present application starts to be executed as the user inputs the message in the message input component on the instant messaging client interface. Since the user inputs the message in the message input component in units of characters, words, phrases or whole sentences, the flow in the present application starts to be executed for the content which has been input in the message input component so far once one unit of content is input into a screen by the user.

For example, in the process of inputting the message "for happiness, together go swimming", the user sequentially inputs "for", "happiness", "together" and "go swimming" in the message input component.

Then, after the user inputs "for", the flow starts to be executed with "for" as the message input by the user currently. After the user inputs "happiness", the flow starts to be executed with "for happiness" as the message input by the user currently. After the user inputs "together", the flow starts to be executed with "for happiness, together" as the message input by the user currently. After the user inputs "go swimming", the flow starts to be executed with "for happiness, together go swimming" as the message input by the user currently.

In addition to the above-mentioned preferred implementation, the flow of the method according to the present application may start to be executed after the user inputs one message.

202: Judging whether expression recommendation is triggered by the input message, if yes, executing 203, and if expression recommendation is not triggered, proceeding to 201.

203: Determining the occurrence probability of each candidate expression in the input message based on the expression triggering probability of a similar history message of the input message and the probability of each candidate expression input along with the similar history message.

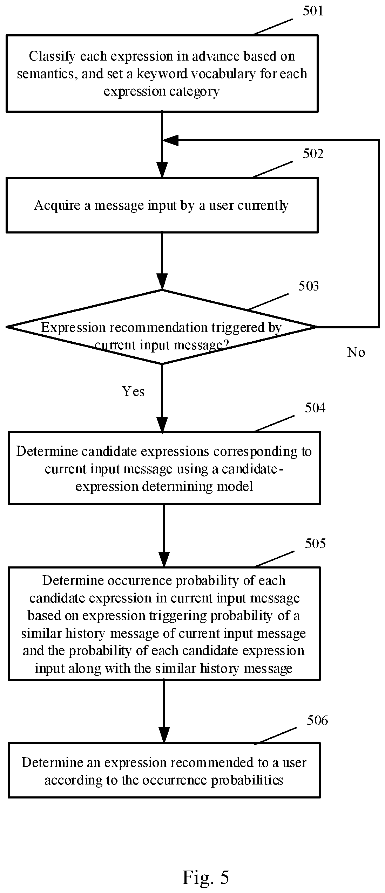

In the present embodiment, all expressions in an expression library may be used as the candidate expressions, and the occurrence probability of each candidate expression in the current input message may be calculated respectively. As a preferred implementation, the candidate expressions may be determined based on keywords of the current input message, which will be described in detail in the following embodiment shown in Fig. 5.

204: Determining an expression recommended to a user according to the occurrence probabilities.

The candidate expressions may be ranked in a descending order of the occurrence probabilities, and the top N candidate expressions may be selected as the expression recommended to the user. N is a preset positive integer.

The expressions with the occurrence probabilities greater than or equal to an occurrence probability threshold may be selected as the expression recommended to the user, and the expressions are recommended in a descending order of the occurrence probabilities.

Since the method according to the present application has a preferred applicable implementation of recommending the expressions to the user in real time for the message input by the user currently, the following embodiment will be described with expression recommendation for the message input by the user currently as an example.

An implementation in the above-mentioned step 202 will be described below in conjunction with an embodiment.

As a preferred implementation, an expression recommendation triggering mechanism adopted in the above-mentioned step 202 is based on the message level; that is, whether to trigger expression recommendation is determined based on the acquired current input message, and the expression recommendation triggering mechanism may more accurately conform to an expression input intention of the user compared with an expression recommendation triggering mechanism based on the keyword level.

Firstly, the similar history message of the current input message in a message mapping table may be determined; and if the expression triggering probability corresponding to the determined similar history message in the message mapping table is greater than or equal to a preset triggering probability threshold, the current input message is determined to trigger the expression recommendation.

In the present application, the above-mentioned message mapping table may be offline generated in advance using carrying conditions of expressions by history messages in a historical dialogue message library, such that the expression triggering probability of the similar history message may be obtained by directly querying the message mapping table in this step. The message mapping table includes history messages and expression triggering probabilities corresponding to the history messages, and the expression triggering probabilities mean the probabilities of triggering expression input by the history messages.

As a preferred implementation, a process of determining the message mapping table may include the following steps:
S11: Collecting the history messages along with which expressions are input in the history dialogue message library in advance.

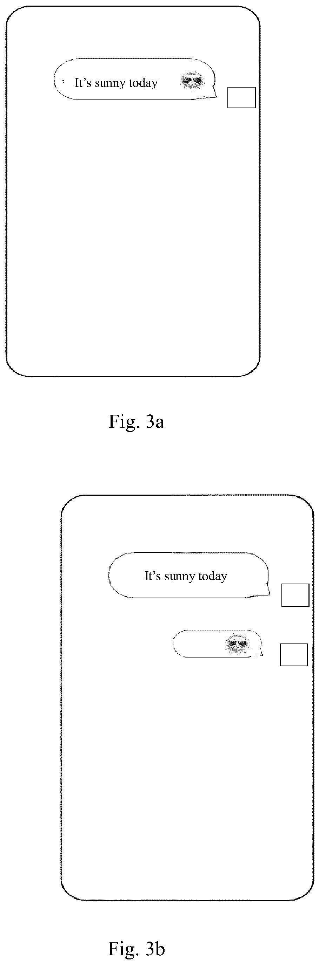

The history dialogue message library stores various kinds of message content generated when users perform message interaction by instant messaging applications, some history messages carry expressions, and some history messages do not carry expressions. The statement that the history message carries the expression means that the expression is entered along with the history message and may be located anywhere in the history message, for example, the beginning, middle or end of the message. For example, as shown in Fig. 3a, user a inputs "it's sunny today" and an expression representing "sunniness" and then sends them as a message, and the expression representing "sunniness" is input along with the message "it's sunny today".

Further, in a history dialogue, the user inputs a history message and then inputs an expression immediately, but the history message and the expression are input as two adjacent messages instead of one message, and the expression may also be considered to be input along with the history message. For example, as shown in Fig. 3b, the user inputs and sends "it's sunny today", and then immediately inputs and sends the expression representing "sunniness", without any other message (including messages of any user) between the two messages, and the expression representing "sunniness" may be considered to be input along with the message "it's sunny today".

S 12: Normalizing the history messages having the expressions input therewith based on semantics.

Here, the history messages having the expressions input therewith may be clustered based on the semantics, and the history messages belonging to the same cluster may be normalized by the same statement, for example, the history message in the center of the cluster may be used as a normalized statement of all history messages of the cluster.

S13: Counting the probability that each normalized history message is input along with the expression as the expression triggering probability.

This step includes: counting the ratio of the number of times of each normalized history message having the expression input therewith and the number of times of this history message (including the total number of times of this history message which has and does not have the expression input therewith), and taking the value of the ratio as the expression triggering probability of this history message.

S14: Storing each normalized history message and the corresponding expression triggering probability in the message mapping table.

The resulting mapping table *T*1 may be represented as {(*mᵢ,pmᵢ*)} ∈ *T*1, wherein *mᵢ* is the *i* th normalized history message, and *pmᵢ* is the expression triggering probability of the history message *mᵢ.*

In the process of inputting the message by the user, similarity calculation based on the semantics is performed on the current input message and each history message in the message mapping table in real time, and the history message with the similarity greater than or equal to a preset similarity threshold and the highest similarity is determined to be the above-mentioned similar history message.

If there exists no history message with the similarity to the current input message greater than or equal to the preset similarity threshold, the expression recommendation is not triggered, and the message input by the user is continuously acquired.

If there exist history messages with the similarity to the current input message greater than or equal to the preset similarity threshold, the history message with the highest similarity may be acquired therefrom as the similar history message of the current input message, whether the expression triggering probability of the similar history message is greater than or equal to the preset triggering probability threshold ∂ is further judged, if yes, expression recommendation is determined to be triggered by the current input message, and otherwise, the expression recommendation is not triggered, and the message input by the user is continuously acquired.

It should be noted that the above-mentioned message mapping table may be a common message mapping table constructed using history messages of all users, or a message mapping table for each user constructed using the history messages of each user.

When the message mapping table is constructed for for each user, the above-mentioned triggering probability threshold may be set for each user by means of an empirical value, an experimental value, or a statistical value.

If the message mapping table is constructed common to all the users, the above-mentioned triggering probability threshold may be a shared threshold set for all the users by means of an empirical value, an experimental value, or a statistical value. Or, a personalized threshold for each user may be combined into the shared threshold set for all the users, and then, the shared threshold and the personalized thresholds are merged (for example, weighted), so as to obtain the triggering probability threshold for each user.

An implementation of the above-mentioned step 203 will be described below in detail in conjunction with an embodiment.

The probability that each candidate expression is input along with the similar history message may be counted in real time, but as a preferred implementation, the probability may be offline counted in advance and obtained by direct query in this step. Specifically, in the process of forming the above-mentioned message mapping table, after the expression triggering probability of each normalized history message is obtained in the step S13, each normalized history message with the expression triggering probability greater than or equal to the preset triggering probability threshold is determined; and the probability that each expression is input along with each determined history message is counted respectively and stored in an expression mapping table. In the step 203, the probability that each candidate expression is input along with the similar history message is obtained by querying the expression mapping table.

The resulting expression mapping table *T*2 may be represented as {(*eⱼ* , *mᵢ*, *pe_{i,j}*)} ∈ *T*1, wherein *eⱼ* represents the *j* th expression, and *pe_{i,j}* is the probability that the expression *eⱼ* is input along with the history message *mᵢ.*

Similar to the message mapping table, the expression mapping table may be constructed for all the users using the history messages of all the users, or for each user using the history messages of each user.

In this step, it is assumed that the similar history message is *mᵢ*, and the corresponding expression triggering probability is *pmᵢ*, and the occurrence probability of the candidate expression *eⱼ* in the current input message may be *pmᵢ* × *pe_{i,j}.* Certainly, other calculation methods than direct multiplication of *pmᵢ* and *pe_{i,j}* may be adopted.

After the above-mentioned step 204, if the steps shown in Fig. 2 are executed by the server, the server sends the expression recommended to the user to a corresponding client in the terminal device, and the client displays the recommended expressions to the user. Different display modes may be adopted according to different clients. If the client is configured as an instant messaging client, the recommended expressions may be displayed to the user in the form of a pop-up window or at a specific position of a message input box in the process of inputting the message by the user. If the client is configured as an input method client, the recommended expressions may be displayed to the user at a specific position on an input method panel. The recommended expressions are ranked in the descending order of the occurrence probability.

If the user selects one expression from the recommended expressions for input, this expression may be inserted into the current position of a cursor.

### For example:

it is assumed that the user inputs the message "for happiness, together go swimming" in the instant messaging client, and the message mapping table is inquired in real time along with the input of the message by the user, so as to judge whether the expression recommendation is triggered by the current input message; and it is assumed that after the user inputs "for happiness, together go swimming", the message mapping table is inquired based on semantic similarity, the similar history message corresponding to this message is determined to be "together go swimming", and the expression triggering probability of the similar history message corresponding to the message is inquired to be greater than the preset triggering probability threshold, thereby triggering the expression recommendation.

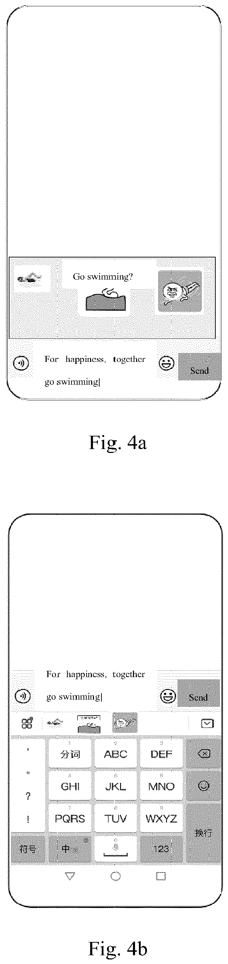

The expression mapping table is inquired continuously, the probability that each expression is input along with the similar history message "together go swimming" is determined, and the occurrence probability of each expression in the current input message "for happiness, together go swimming" is obtained further in conjunction with the expression triggering probability of the similar history message. As shown in Fig. 4a, when the occurrence probabilities of three expressions are determined to exceed the preset occurrence probability threshold, the three expressions are sent to the instant messaging client, and the instant messaging client displays the three expressions to the user in the form of the pop-up window. Or, as shown in Fig. 4b, the recommended expressions are sent to the input method client, and the input method client displays the three expressions at the specific position of the input method panel.

The user may directly select one expression from the expressions recommended in Fig. 4a or 4b, insert the expression into the cursor position b, and then click a sending button to send a message containing the selected expression. Obviously, compared with the technical solution in the prior art that the user is required to click the designated component to browse a large number of expression packages and select the expression conforming to the demand of the user, more time and labor as well as network traffic are saved.

If the recommended expressions do not conform to the demand of the user or the user does not want to insert the expressions, the user may continue to input the message or directly click the sending button to send the message without selecting any expression. No matter which way the user selects, the message sent by the user is used as a new history message, and the server may acquire the expression input by the user along with the current input message or the input message without any input expression, so as to update the message mapping table and the expression mapping table.

Fig. 5 is a flow chart of another method according to an embodiment of the present application, and as shown in Fig. 5, the method may include the following steps:
501: Classifying each expression in advance based on semantics, and setting a keyword vocabulary for each expression category.

Firstly, each expression in the expression library is classified based on the semantics by manual annotation or by an artificial intelligence model, and the specific way for classifying the expressions is not limited in the present application.

Each expression category obtained by classification in the present application may express various emotions, such as happiness, sadness, nervousness, excitement, fear, surprise, helplessness, or the like; or express some action or behavior subjects, such as approval, thank, comfort, coquetry, swimming, running, circling, or the like; or be related to some popular entities, such as Crayon Shin-chan, Pikachu, stars, or the like. One expression may belong to plural expression categories at the same time.

Some keywords may be set for each expression category to constitute the keyword vocabulary of this expression category, and may be representatively associated with the expressions in the expression category. For example, the expression category expressing happy emotions may have a keyword vocabulary including words, such as "gladness", "happiness", "cheerfulness", "smile", or the like.

The above-mentioned expression categories and keyword vocabularies may be expanded, and are not exhaustive.

502: Acquiring a message input by a user currently.

This step is the same as the step 201 in the embodiment shown in Fig. 2, and is not repeated herein.

503: Judging whether expression recommendation is triggered by the current input message, if yes, executing 504, and if expression recommendation is not triggered, proceeding to 502.

This step is the same as the step 202 in the embodiment shown in Fig. 2, and is not repeated herein.

504: Determining candidate expressions corresponding to the current input message using a candidate-expression determining model.

In the embodiment shown in Fig. 2, all expressions are used as the candidate expressions, which is inefficient and has insufficient precision and a large calculation amount. Therefore, in the present embodiment, a preferred implementation is provided, including: first screening out a part of expressions from the expression library by the candidate-expression determining model as the candidate expressions, and then determining the expression recommended to the user from the candidate expressions.

Specifically, the current input message may be input into the candidate-expression determining model, so as to obtain the candidate expressions to determine the probability that the current input message triggers each expression category; and the expression corresponding to the expression category with the probability that the current input message triggers each expression category meets a preset requirement is selected as the candidate expression. The candidate-expression determining model determines the probability that the current input message triggers each expression category according to the hit condition of the keyword vocabulary by the current input message.

The candidate-expression determining model actually performs word segmentation on the current input message and maps the hit condition of the keyword vocabulary of each expression category by a word obtained after the word segmentation as the probability that the current input message triggers each expression category. The candidate-expression determining model may be pre-trained. For example, the history messages and the expression categories input along with the history messages are used as training data to train a classification model according to the categories of the expressions input along with the history messages and the hit condition of the keyword vocabulary of each expression category by the history messages, so as to obtain the candidate-expression determining model. The training process has a target that the expression category corresponding to the highest probability in the probabilities of the expression categories output by the candidate-expression determining model for the history message is consistent with the category of the expression input along with the history message.

505: Determining the occurrence probability of each candidate expression in the current input message based on the expression triggering probability of a similar history message of the current input message and the probability of each candidate expression input along with the similar history message.

This step is the same as the step 203 in the embodiment shown in Fig. 2, and is not repeated herein.

506: Determining the expression recommended to the user according to the occurrence probabilities.

This step is the same as the step 204 in the embodiment shown in Fig. 2, and is not repeated herein.

The method according to the present application is described above in detail, and an apparatus according to the present application will be described below in detail in conjunction with an embodiment.

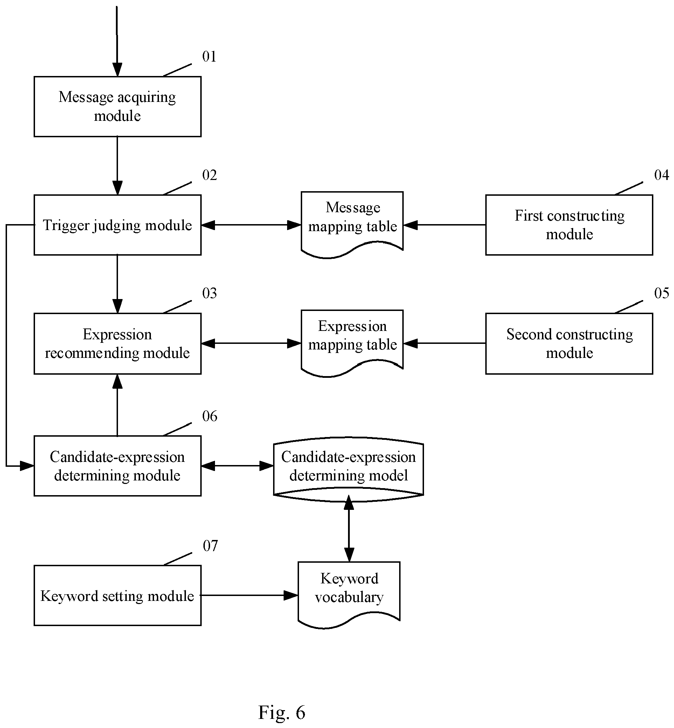

Fig. 6 is a structural diagram of the apparatus according to the embodiment of the present application; the apparatus may be configured as an application located at a server, or a functional unit, such as a plug-in or software development kit (SDK) located in the application of the server, or the like, or be located at a computer terminal with high computing power, which is not particularly limited in the embodiment of the present disclosure. As shown in Fig. 6, the apparatus may include a message acquiring module 01 and an expression recommending module 03, and may further include a trigger judging module 02, a first constructing module 04, a second constructing module 05, a candidate-expression determining module 06 and a keyword setting module 07. The main functions of each constitutional module are as follows.

The message acquiring module 01 is configured to acquire an input message.

The expression recommending module 03 is configured to, if the input message triggers expression recommendation, determine the occurrence probability of each candidate expression in the input message based on the expression triggering probability of a similar history message of the input message and the probability of each candidate expression input along with the similar history message, and determine an expression recommended to a user from the candidate expressions according to the occurrence probabilities.

The second constructing module 05 is configured to determine each normalized history message with the expression triggering probability greater than or equal to a preset triggering probability threshold; and count the probability that each expression is input along with each determined history message respectively and store the probability in an expression mapping table.

The trigger judging module 02 is configured to judge whether the input message triggers expression recommendation.

As a preferred implementation, the trigger judging module 02 may determine the similar history message of the input message in a message mapping table; and if the expression triggering probability corresponding to the similar history message in the message mapping table is greater than or equal to a preset triggering probability threshold, determine that the input message triggers the expression recommendation.

The first constructing module 04 is configured to collect the history messages along with which expressions are input in a history dialogue message library in advance; normalize the history messages having the expressions input therewith based on semantics; count the probability that each normalized history message is input along with the expression as the expression triggering probability; and store each normalized history message and the corresponding expression triggering probability in the message mapping table.

The above-mentioned expression recommending module 03 may obtain the probability that each candidate expression is input along with the similar history message by querying the expression mapping table.

In the embodiment of the present application, all the expressions in the expression library may be taken as the candidate expressions. However, as a preferred implementation, the candidate-expression determining module 06 may input the input message into the candidate-expression determining model, so as to obtain the candidate expressions to determine the probability that the input message triggers each expression category; and select the expression corresponding to the expression category with the probability that the input message triggers each expression category meets a preset requirement as the candidate expression.

The keyword setting module 07 is configured to classify each expression in advance based on semantics, and set a keyword vocabulary for each expression category, such that the candidate-expression determining model determines the probability that the input message triggers each expression category according to the hit condition of the keyword vocabulary by the input message.

When determining the expression recommended to the user from the candidate expressions according to the occurrence probabilities, the expression recommending module 03 may rank the candidate expressions in a descending order of the occurrence probabilities, and select the top N candidate expressions as the expression recommended to the user, with N being a preset positive integer; or select the candidate expressions with the occurrence probabilities greater than or equal to a preset occurrence probability threshold as the expression recommended to the user.

Further, the first constructing module 04 is further configured to acquire the expression input by the user along with the input message or the input message without any input expression, so as to update the message mapping table.

The second constructing module 05 is further configured to acquire the expression input by the user along with the input message or the input message without any input expression, so as to update the expression mapping table.

The input expressions may include expressions selected from the expression recommended to the user for input or expressions input by the user in other ways.

According to the embodiment of the present application, there are also provided an electronic device and a readable storage medium.

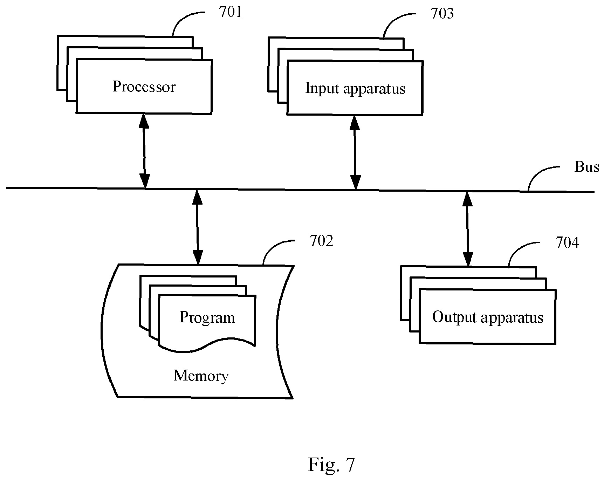

Fig. 7 is a block diagram of an electronic device for the method for recommending expressions according to the embodiments of the present application. The electronic device is intended to represent various forms of digital computers, such as laptop computers, desktop computers, workstations, personal digital assistants, servers, blade servers, mainframe computers, and other appropriate computers. The electronic device may also represent various forms of mobile apparatuses, such as personal digital processors, cellular telephones, smart phones, wearable devices, and other similar computing apparatuses. The components shown herein, their connections and relationships, and their functions, are meant to be exemplary only, and are not meant to limit implementation of the present application described and/or claimed herein.

As shown in Fig. 7, the electronic device includes one or more processors 701, a memory 702, and interfaces configured to connect the components, including high-speed interfaces and low-speed interfaces. The components are interconnected using different buses and may be mounted at a common motherboard or in other manners as desired. The processor may process instructions for execution within the electronic device, including instructions stored in or at the memory to display graphical information for a GUI at an external input/output apparatus, such as a display device coupled to the interface. In other implementations, plural processors and/or plural buses may be used with plural memories, if desired. Also, plural electronic devices may be connected, with each device providing some of necessary operations (for example, as a server array, a group of blade servers, or a multi-processor system). In Fig. 7, one processor 701 is taken as an example.

The memory 702 is configured as the non-transitory computer readable storage medium according to the present application. The memory stores instructions executable by the at least one processor to cause the at least one processor to perform a method for recommending expression to user according to the present application. The non-transitory computer readable storage medium according to the present application stores computer instructions for causing a computer to perform the method for recommending expressions according to the present application.

The memory 702 which is a non-transitory computer readable storage medium may be configured to store non-transitory software programs, non-transitory computer executable programs and modules, such as program instructions/modules corresponding to the method for recommending expressions according to the embodiments of the present application. The processor 701 executes various functional applications and data processing of a server, that is, implements the method for recommending expressions according to the above-mentioned embodiments, by running the non-transitory software programs, instructions, and modules stored in the memory 702.

The memory 702 may include a program storage area and a data storage area, wherein the program storage area may store an operating system and an application program required for at least one function; the data storage area may store data created according to use of the electronic device, or the like. Furthermore, the memory 702 may include a high-speed random access memory, or a non-transitory memory, such as at least one magnetic disk storage device, a flash memory device, or other non-transitory solid state storage devices. In some embodiments, optionally, the memory 702 may include memories remote from the processor 701, and such remote memories may be connected to the electronic device via a network. Examples of such a network include, but are not limited to, the Internet, intranets, local area networks, mobile communication networks, and combinations thereof.

The electronic device may further include an input apparatus 703 and an output apparatus 704. The processor 701, the memory 702, the input apparatus 703 and the output apparatus 704 may be connected by a bus or other means, and Fig. 7 takes the connection by a bus as an example.

The input apparatus 703 may receive input numeric or character information and generate key signal input related to user settings and function control of the electronic device, such as a touch screen, a keypad, a mouse, a track pad, a touch pad, a pointing stick, one or more mouse buttons, a trackball, a joystick, or the like. The output apparatus 704 may include a display device, an auxiliary lighting apparatus (for example, an LED) and a tactile feedback apparatus (for example, a vibrating motor), or the like. The display device may include, but is not limited to, a liquid crystal display (LCD), a light emitting diode (LED) display, and a plasma display. In some implementations, the display device may be a touch screen.

Various implementations of the systems and technologies described here may be implemented in digital electronic circuitry, integrated circuitry, application specific integrated circuits (ASIC), computer hardware, firmware, software, and/or combinations thereof. The systems and technologies may be implemented in one or more computer programs which are executable and/or interpretable on a programmable system including at least one programmable processor, and the programmable processor may be special or general, and may receive data and instructions from, and transmitting data and instructions to, a storage system, at least one input apparatus, and at least one output apparatus.

These computer programs (also known as programs, software, software applications, or codes) include machine instructions for a programmable processor, and may be implemented using high-level procedural and/or object-oriented programming languages, and/or assembly/machine languages. As used herein, the terms "machine readable medium" and "computer readable medium" refer to any computer program product, device and/or apparatus (for example, magnetic discs, optical disks, memories, programmable logic devices (PLD)) for providing machine instructions and/or data for a programmable processor, including a machine readable medium which receives machine instructions as a machine readable signal. The term "machine readable signal" refers to any signal for providing machine instructions and/or data for a programmable processor.

To provide interaction with a user, the systems and technologies described here may be implemented on a computer having: a display apparatus (for example, a cathode ray tube (CRT) or liquid crystal display (LCD) monitor) for displaying information to a user; and a keyboard and a pointing apparatus (for example, a mouse or a trackball) by which a user may provide input for the computer. Other kinds of apparatuses may also be used to provide interaction with a user; for example, feedback provided for a user may be any form of sensory feedback (for example, visual feedback, auditory feedback, or tactile feedback); and input from a user may be received in any form (including acoustic, voice or tactile input).

The systems and technologies described here may be implemented in a computing system (for example, as a data server) which includes a back-end component, or a computing system (for example, an application server) which includes a middleware component, or a computing system (for example, a user computer having a graphical user interface or a web browser through which a user may interact with an implementation of the systems and technologies described here) which includes a front-end component, or a computing system which includes any combination of such back-end, middleware, or front-end components. The components of the system may be interconnected through any form or medium of digital data communication (for example, a communication network). Examples of the communication network include: a local area network (LAN), a wide area network (WAN) and the Internet.

A computer system may include a client and a server. Generally, the client and the server are remote from each other and interact through the communication network. The relationship between the client and the server is generated by virtue of computer programs which run on respective computers and have a client-server relationship to each other.

It should be understood that various forms of the flows shown above may be used and reordered, and steps may be added or deleted. For example, the steps described in the present application may be executed in parallel, sequentially, or in different orders, which is not limited herein as long as the desired results of the technical solution disclosed in the present application may be achieved.

The above-mentioned implementations are not intended to limit the scope of the present application. It should be understood by those skilled in the art that various modifications, combinations, sub-combinations and substitutions may be made, depending on design requirements and other factors. Any modification, equivalent substitution and improvement made within the spirit and principle of the present application all should be included in the extent of protection of the present application.

## Claims

1. A method for recommending expression to user, comprising:
acquiring (201) an input message;
in response to the input message triggering (202) expression recommendation, determining (203) the occurrence probability of each candidate expression in the input message based on the expression triggering probability of a similar history message of the input message and the probability of each candidate expression input along with the similar history message; and
determining (204) an expression recommended to a user from the candidate expressions according to the occurrence probabilities.

2. The method according to claim 1, further comprising:
determining the similar history message of the input message in a message mapping table; and
if the expression triggering probability corresponding to the similar history message in the message mapping table is greater than or equal to a preset triggering probability threshold, determining that the input message triggers the expression recommendation.

3. The method according to claim 2, further comprising:
collecting the history messages along with which expressions are input in the history dialogue message library in advance;
normalizing the history messages having the expressions input therewith based on semantics;
counting the probability that each normalized history message is input along with the expression as the expression triggering probability; and
storing each normalized history message and the corresponding expression triggering probability in the message mapping table.

4. The method according to claim 3, further comprising:
determining each normalized history message with the expression triggering probability greater than or equal to a preset triggering probability threshold; and
counting the probability that each expression is input along with each determined history message respectively and storing the probability in an expression mapping table;
wherein the probability that each candidate expression is input along with the similar history message is obtained by querying the expression mapping table.

5. The method according to claim 1, further comprising:
inputting the input message into the candidate-expression determining model, so as to obtain the candidate expressions to determine the probability that the input message triggers each expression category; and
selecting the expression corresponding to the expression category with the probability that the input message triggers each expression category meets a preset requirement as the candidate expression.

6. The method according to claim 5, further comprising: classifying each expression in advance based on semantics, and setting a keyword vocabulary for each expression category; and
determining, by the candidate-expression determining model, the probability that the input message triggers each expression category according to the hit condition of the keyword vocabulary by the input message.

7. The method according to claim 1, wherein the determining an expression recommended to the user from the candidate expressions according to the occurrence probabilities comprises:
ranking the candidate expressions in a descending order of the occurrence probabilities, and selecting the top N candidate expressions as the expression recommended to the user, with N being a preset positive number; or
selecting the candidate expressions with the occurrence probabilities greater than or equal to an occurrence probability threshold as the expression recommended to the user.

8. The method according to claim 4, further comprising:
acquiring the expression input by the user along with the input message or the input message without any input expression, so as to update the message mapping table and the expression mapping table, wherein the input expression comprises the expression selected from the expression recommended to the user for input.

9. An apparatus for recommending expression to user, comprising:
a message acquiring module (01) configured to acquire an input message; and
an expression recommending module (03) configured to, in response to the input message triggering expression recommendation, determine the occurrence probability of each candidate expression in the input message based on the expression triggering probability of a similar history message of the input message and the probability of each candidate expression input along with the similar history message, and determine an expression recommended to a user from the candidate expressions according to the occurrence probabilities.

10. The apparatus according to claim 9, further comprising:
a trigger judging module (02) configured to judge whether the input message triggers expression recommendation by:
determining the similar history message of the input message in a message mapping table; and
if the expression triggering probability corresponding to the similar history message in the message mapping table is greater than or equal to a preset triggering probability threshold, determining that the input message triggers the expression recommendation.

11. The apparatus according to claim 10, further comprising:
a first constructing module (04) configured to collect the history messages along with which expressions are input in a history dialogue message library in advance; normalize the history messages having the expressions input therewith based on semantics; count the probability that each normalized history message is input along with the expression as the expression triggering probability; and store each normalized history message and the corresponding expression triggering probability in the message mapping table.

12. The apparatus according to claim 11, further comprising:
a second constructing module (05) configured to determine each normalized history message with the expression triggering probability greater than or equal to a preset triggering probability threshold; and count the probability that each expression is input along with each determined history message respectively and store the probability in an expression mapping table;
wherein the expression recommending module obtains the probability that each candidate expression is input along with the similar history message by querying the expression mapping table.

13. The apparatus according to claim 9, further comprising:
a candidate-expression determining module (06) configured to input the input message into the candidate-expression determining model, so as to obtain the candidate expressions to determine the probability that the input message triggers each expression category; and select the expression corresponding to the expression category with the probability that the input message triggers each expression category meets a preset requirement as the candidate expression.

14. An electronic device, comprising:
at least one processor; and
a memory connected with the at least one processor communicatively;
wherein the memory stores instructions executable by the at least one processor to enable the at least one processor to perform the method according to any one of claims 1 to 8.

15. A non-transitory computer readable storage medium with computer instructions stored thereon, wherein the computer instructions are used for causing a computer to perform the method according to any one of claims 1 to 8.
